Europäisches Patentamt

European Patent Office

Office européen des brevets

(11) Publication number: **0 427 313 A2**

# EUROPEAN PATENT APPLICATION

(21) Application number: 90202849.7

(51) Int. Cl.⁵: **C08J 5/04**

(22) Date of filing: **25.10.90**

(30) Priority: **09.11.89 GB 8925369**

(43) Date of publication of application:
**15.05.91 Bulletin 91/20**

(84) Designated Contracting States:
**DE DK ES FR IT NL SE**

(71) Applicant: **T&N TECHNOLOGY LIMITED
Cawston House Cawston
Rugby Warwickshire, CV22 7SB(GB)**

(72) Inventor: **Hall, David Geoffrey
747 Rochdale Road
Royton, Oldham, Lancashire 0L2 5UW(GB)**

(74) Representative: **Hadfield, Robert Franklin et al
Bowdon House PO Box 20 Ashburton Road
West Trafford Park
Manchester M17 1RA(GB)**

(54) Fibre-reinforced elastomeric sheet.

(57) In a process for the manufacture of fibre-reinforced elastomeric sheet suitable for use as gasket material, a laminate of non-woven fibrous fabric eg. glass tissue, impregnated with a suspension of inorganic filler such as calcium carbonate in a solution of curable elastomer, is cured under heat and pressure to obtain sheet of compression at least 4% , recovery at least 40% and defined stress retention.

The process yields a product much less anisotropic than that obtained from the well known "it" calendering process, which utilises free reinforcing fibre.

EP 0 427 313 A2

# FIBRE-REINFORCED ELASTOMERIC SHEET

This invention relates to fibre-reinforced elastomeric sheet, especially sheet suitable for use in the manufacture of gaskets.

Such sheet can be produced by the "it" calendering process, which involves the preparation of a dough from a mixture of reinforcing fibre eg. glass fibres, filler eg. barytes, and a solution of curable elastomer, eg. nitrile butadiene rubber, styrene butadiene rubber, natural rubber or polychloroprene.The dough is fed to the nip of a calender consisting of a large heated roller or "bowl" and a smaller cooled bowl. The nip is gradually widened, allowing a sheet to build up on the heated bowl, and the solvent evaporates from it as the bowl rotates. However, owing to the high pressures prevailing at the nip there is a tendency for fibres to be aligned in the direction of rotation of the bowls, typically giving a ratio of 2:1 (as inferred from measurement ot the tensile strength of the sheet produced) for fibrillated fibres such as asbestos and aramid (polyaromaticamide), but as much as 5:1 for non-fibrillated fibres such as glass. Such anisotropy is sometimes undesirable in the resulting elastomeric sheet product.

According to the present invention there is provided a process for the manufacture of fibre-reinforced elastomeric sheet suitable for use as gasketing material, in which a laminate of non-woven fibrous fabric impregnated with a suspension of inorganic filler in a solution of curable elastomer is cured under heat and pressure to obtain sheet of compression at least 4%, recovery at least 40% and stress retention as set out later.

There have already been proposed, eg in GB-A-2 147 850, manufacturing processes which comprise impregnation, lamination and curing steps as set out above, but these steps have been so designed as to yield, from the materials subjected to them, composites which are essentially rigid, lacking the compression,recovery and stress retention which are essential for utility as gasket material.

Preferably, the fabric employed in the process of the invention is made of temperature-resistant fibre, such as carbon, poly (aromaticamide) eg. Kevlar (trade mark), or-as is preferred - glass fibre. If a glass tissue is employed as the fabric, it may be one whose fibres are bonded with adhesive or mechanically bonded.

The lamination step is conveniently carried out at a temperature in the range 100 - 180° C and a pressure in the range 1 to 25 MPa.

The elastomer employed may be any of those already referred to. The process is preferably carried out with proportions of ingredients such as to obtain a product with an elastomer content less than 20% by weight.

The step of impregnation may be carried out in two or more stages. Of these the first may utilise as impregnant an elastomer solution which is free from filler or is of relatively low weight ratio filler:elastomer, while a subsequent stage utilises as impregnant an elastomer solution of high weight ratio filler:elastomer.

Alternatively, the same impregnant may be used in each stage. Multi-step impregnation facilitates encapsulation of the fibre with the elastomer, and yet limits the total elastomer content so as to achieve satisfactory high-temperature load-bearing capacity in the product, as measured by stress retention.

Generally the stress retention of the elastomeric sheet product (British Standard BS1832) will be at least 17.5 MPa at a thickness of 1.5mm and temperature of 300° C; and the process of the invention can, as shown in the Examples later, readily be operated to obtain sheet of stress retention greater than 20MPa at 1.5mm thickness. This ability to generate high stress retention is a specially valuable feature.

The filler employed may be any of those conventional in this field, such as calcium carbonate, barytes (barium sulphate), mica, talc, graphite, exfoliated vermiculite, chlorite, milled glass fibre or wollastonite.

The preferred products of the process of the invention have a compression of at least 5%, preferably 5-20%.

The invention will now be further described with reference to the following Examples, in which flexible sheet suitable for use as gasket material for sealing fluids (eg steam, oil, water) at temperatures up to 450° C and even higher is made from glass tissue.

## EXAMPLE 1

The glass tissue employed was a commercially available product manufactured by a wet laying process from chopped ECR glass fibres of length 18 mm and diameter 13$\mu$m. The binder was polyester (8-10% by weight of the tissue). The mass per unit area of the tissue was 70g/m$^2$.

The tissue was unwound from a roll and was passed through a bath containing a solution of acrylonitrile butadiene rubber in toluene, with calcium carbonate in suspension as filler and a conventional curing system. The tissue was then passed through the nip of a pair of rolls at low pressure to remove excess impregnant, and toluene was allowed to evaporate from it. It was then impregnated a second time using the same procedure, but with a bath having different concentrations of the various ingredients, as follows.

|  | 1st Impregnation | 2nd Impregnation |
| --- | --- | --- |
| Nitrile rubber | 200g | 80g |
| Calcium carbonate | 200g | 720g |
| Cure system | 28g | 11.2g |
| Toluene | 1230cm$^3$ | 800cm$^3$ |

The dry weight of the tissue was recorded after each impregnation and the mass/unit area of the sheet was determined:

|  | Mass/Unit area (grams/m$^2$) |
| --- | --- |
| Glass tissue | 70 |
| After 1st impregnation | 180 |
| After 2nd impregnation | 760 |

| Sheet composition | |
| --- | --- |
|  | % By weight |
| Nitrile rubber | 14.6 |
| Calcium carbonate | 76.0 |
| Glass fibre | 9.4 |

Each side of the impregnated tissue was then sprayed with a 1% by weight solution of the nitrile rubber in toluene, and heated to evaporate toluene. The amount of rubber thus deposited was 3 g/m$^2$ Three thicknesses of the impregnated tissue superimposed one upon another were then pressed at a temperature of 150° C for 10 minutes under a pressure of 2800 psi (=19.3 MPa). The resulting sheet was 1.25 mm thick and had similar properties to conventional "it" calendered sheets but with a much reduced anisotropy, in particular:

| Compression (ASTM F36) | 4.5% |
| --- | --- |
| Recovery (ASTM F36) | 50.0% |
| Stress retention (BS1832) | 30.2 MPa |
| Tensile strength A direction | 18.6 MPa |
| B direction | 10.9 MPa |
| Gas leakage rate (DIN 3754) | 1.1 cm$^3$ /min |

At a thickness of 1.5mm rather than the tested 1.25mm, the stress retention would of course be less than 30.2MPa; in particular it would be about 24MPa.

EP 0 427 313 A2

EXAMPLE 2

The procedure of Example 1 was followed generally, but with the roll nip width reduced so as to leave the dry tissue weights at only 168g/m² and 358g/m² after the first and second impregnations respectively. No spray coatings were applied prior to lamination, which utilised 5 plies instead of 3.

Gaskets cut from the sheet thus produced- had these properties:

| Thickness | 1.36 mm |
|---|---|
| Compression | 4.2% |
| Recovery | 62.0% |
| Stress retention | 26.7 MPa |
| Gas leakage rate | 0 |

EXAMPLE 3

The procedure of Example 1 was followed generally, but with these differences:

Post-impregnation dry tissue weights/m² : 163g; 392g

No of plies laminated : 8

Lamination conditions : 5.7 MPa for 5 minutes at 150° C

Gaskets cut from this sheet material had the following properties:

| Thickness | 1.46 mm |
|---|---|
| Compression | 8.7% |
| Recovery | 66.7% |
| Stress retention | 23.3 MPa |
| Gas leakage rate | 0 |

EXAMPLE 4

Following generally the procedure of Example 1, gasket sheet was produced using impregnation baths as follows:

| | 1st impregnation | 2nd impregnation |
|---|---|---|
| Nitrile rubber | 200g | 603g |
| Calcium carbonate | ---- | 2850g |
| Cure system | 28g | 84.6g |
| Toluene | 4000cm³ | 4000cm³ |

Post-impregnation dry tissue weights/m² were: 92g; 384g.

No of plies laminated (without spray-coating) : 8

Lamination conditions : 2.76 MPa for 5 minutes at 135° C

The gasket material produced had these properties:

4

| Thickness | 1.66 mm |
|---|---|
| Compression | 5.5% |
| Recovery | 62.7% |
| Stress retention | 19.3 MPa |
| Tensile strength A direction | 35.1 MPa |
| B direction | 27.1 MPa |
| Gas leakage rate | 0.01 $cm^3$ /min |

At a thickness of 1.5mm instead of the tested 1.66mm, the stress retention would of course be higher-- about 22MPa.

EXAMPLE 5

The procedure of Example 1 was modified in the following respects:
Glass tissue employed: fibre length 12 mm
diameter 10 $\mu$m
binder, urea formaldehyde resin
tissue dry weight 68g/$m^2$
Impregnation stages : 3

| Impregnant bath (same for all 3 stages) | |
|---|---|
| Nitrile rubber | 750g |
| Calcium carbonate | 5142g |
| Cure system | 105g |
| Toluene | 5000$cm^3$ |

Post-impregnation dry tissue weights/$m^2$ : 285g; 480g; 624g
No of plies laminated : 5
Lamination conditions : 12.4 MPa for 5 minutes at 135° C
The sheet material product had the following properties:

| Thickness | 1.74 mm |
|---|---|
| Compression | 13.9% |
| Recovery | 64.9% |
| Stress retention | 30.2 MPa |
| Gas leakage rate | 0.8 $cm^3$ /min |

## Claims

1. A process for the manufacture of fibre-reinforced elastomeric sheet suitable for use as gasketing material, characterised in that a laminate of non-woven fibrous fabric impregnated with a suspension of inorganic filler in a solution of curable elastomer is cured under heat and pressure to obtain sheet of compression at least 4%, recovery at least 40% and stress retention at least 17.5 MPa at a thickness of 1.5mm and temperature of 300° C

2. A process according to claim 1 in which the fabric is of carbon fibre.

3. A process according to claim 1 in which the fabric is of poly (aromatic amide) fibre.

4. A process according to claim 1 in which the fabric is of glass fibre.

5. A process according to claim 4 in which the fabric is a non-woven glass tissue.

6. A process according to claim 5 in which the glass tissue is one whose fibres are bonded together with an adhesive.

7. A process according to any of claims 1-6 in which the sheet product contains less than 20% by weight of elastomer.

8. A process according to any of claims 1-7 in which impregnation of the non-woven fibrous fabric with said suspension of inorganic filler in a solution of curable elastomer is carried out in two or more stages.

9. A process according to any of the preceding claims, in which the sheet product has a stress retention of at least 20 MPa.

10. A gasket made from fibre-reinforced sheet produced according to any of claims 1-9.